Europäisches Patentamt

European Patent Office

Office européen des brevets

(19)

(11) Veröffentlichungsnummer: **0 507 977 A1**

## (12) EUROPÄISCHE PATENTANMELDUNG

(21) Anmeldenummer: **91105816.2**

(22) Anmeldetag: **12.04.91**

(51) Int. Cl.5: **H01M 8/24**, H01M 8/12

(43) Veröffentlichungstag der Anmeldung:
**14.10.92 Patentblatt 92/42**

(84) Benannte Vertragsstaaten:
**CH DE DK FR GB IT LI NL SE**

(71) Anmelder: **ABB PATENT GmbH**
**Kallstadter Strasse 1**
**W-6800 Mannheim 31(DE)**

(72) Erfinder: **Rohr, Franz Josef, Dr.**
**Forstweg 2**
**W-6941 Abtsteinach(DE)**

(74) Vertreter: **Rupprecht, Klaus, Dipl.-Ing. et al**
**c/o ABB Patent GmbH, Postfach 10 03 51**
**W-6800 Mannheim 1(DE)**

(54) **Brennstoffzellenanordnung.**

(57) Die Erfindung bezieht sich auf eine Brennstoffzellenanordnung (1) mit einem porösen, keramischen Träger (2), der innere Gaskanäle (3) aufweist und mit senkrecht zu den Gaskanälen (3) auf den äußeren Hauptflächen des Trägers (2) angeordneten Reihen (5) von Brennstoffzellen (4) mit Festelektrolyten (11). Die Brennstoffzellen (4) einer Reihe (5) sind elektrisch in Serie oder parallelgeschaltet, die Brennstoffzellenreihen (5) sind in Serie geschaltet. Die Brennstoffzellenanordnung (1) kann in Brennstoffzellenbatterien angewendet werden.

Fig 1a    Fig 1b

Fig 3

EP 0 507 977 A1

Die Erfindung bezieht sich auf eine Brennstoffzellenanordnung mit einem elektrisch isolierenden, porösen, keramischen Träger, der im Inneren - in einer z.B. senkrechten Richtung verlaufende - Gaskanäle, z.B. Luftkanäle, aufweist, und auf dessen äußeren Hauptflächen mehrere elektrisch miteinander verschaltete Brennstoffzellen aufgebracht sind.

Eine solche Brennstoffzellenanordnung ist aus der DE-A-39 07485 bekannt. Die bekannte Brennstoffzellenanordnung weist relativ großflächige Brennstoffzellen auf, wobei die Brennstoffzellen streifenförmig ausgeführt und auf dem keramischen Träger parallel zum Verlauf der Luftkanäle, die sich im Inneren des Trägers befinden, angeordnet sind. Der genannten Druckschrift sind auch bereits eine Reihe von Dimensionierungsangaben, insbesondere Längen-, Flächen- und Dickenangaben zum keramischen Träger, aber auch Dickenangaben zu Elektroden und zum Festelektrolyten der Brennstoffzelle zu entnehmen, sowie Materialangaben.

In praktischen Versuchen mit Brennstoffzellenanordnungen gemäß der DE-A 39 07 485 haben sich die Dimensionierungsangaben für den keramischen Träger im wesentlichen als vorteilhaft erwiesen, jedoch hat sich gezeigt, daß noch Probleme auftreten, die auf die Gestaltung und die elektrische Schaltung der auf dem Träger befindlichen Zellen zurückzuführen sind. Nachteilig ist z.B. daß durch den Temperaturgradienten und die Abreicherung des Brenngases und der Luft entlang der streifenförmig parallel zu den Gaskanälen verlaufenden Elektroden bedingt, in den Brennstoffzellen am oberen und unteren Ende von senkrecht angeordneten Brennstoffzellen unterschiedliche elektrische Spannungen und Stromdichten erzeugt werden. Dies führt zu ungünstigen Gesamtleistungsdichten und zu einem unbefriedigenden elektrischen Wirkungsgrad der Brennstoffzellenanordnung.

Ein weiterer Nachteil besteht darin, daß in den relativ großen Einzelzellen der bekannten Anordnung hohe Ströme bei niedriger Spannung, d.h. zum Beispiel bei weniger als 1 Volt erzeugt werden, die in den Elektrodenschichten und elektrischen Verbindungsschichten aufgrund deren ohmschen Widerstand hohe Verluste verursachen.

Davon ausgehend liegt der Erfindung die Aufgabe zugrunde, durch Optimierung der Brennstoffzellenanordnung eine Verbesserung herbeizuführen.

Diese Aufgabe wird durch eine Brennstoffzellenanordnung mit einem elektrisch isolierenden, porösen, keramischen Träger gelöst, der im Inneren - in einer z.B. senkrechten Richtung verlaufende - Gaskanäle, z.B. Luftkanäle, aufweist, und auf dessen äußeren Hauptflächen mehrere elektrisch miteinander verschaltete Brennstoffzellen aufgebracht sind, wobei

- die einzelnen Brennstoffzellen eine Fläche von jeweils etwa 1 bis 16 cm$^2$ aufweisen,
- in Bezug auf den Verlauf der Gaskanäle in gleicher Höhe nebeneinander befindliche Brennstoffzellen zu Brennstoffzellenreihen elektrisch in Serie oder parallel geschaltet sind, und
- die Brennstoffzellenreihen elektrisch in Serie geschaltet sind.

Mit der Erfindung wird also vorgeschlagen, die Fläche der Einzelzellen innerhalb bestimmter Grenzen zu wählen, wobei besonders auf eine nicht zu große Ausdehnung der Zellenfläche in Richtung der Gaskanäle im Träger zu achten ist, wie auch den in Unteransprüchen angegebenen vorteilhaften Ausgestaltungen zu entnehmen ist. Größere Spannungsunterschiede innerhalb der Zellen werden durch die Serienschaltung von Brennstoffzellenreihen vermieden.

Eine weitere Verringerung von Leistungsverlusten läßt sich durch geeignete Wahl der Schichtdicken in Abhängigkeit von den Brennstoffzellenflächen erzielen, wie nachstehend ausgeführt wird.

Eine ausführlichere Beschreibung der Erfindung erfolgt anhand von in der Zeichnung dargestellten Ausführungsbeispielen.

Es zeigt:

Figur 1     in Serie geschaltete Brennstoffzellenreihen auf einem keramischen Träger,

Figur 2     Brennstoffzellenanordnung entsprechend der Anordnung gemäß Figur 1, wobei jedoch die Brennstoffzellenreihen aus einzelnen elektrisch in Serie geschalteten Brennstoffzellen bestehen,

Figur 3     Brennstoffzellenanordnung, bei der mehrere Gruppen von Brennstoffzellen auf einem Träger angeordnet sind.

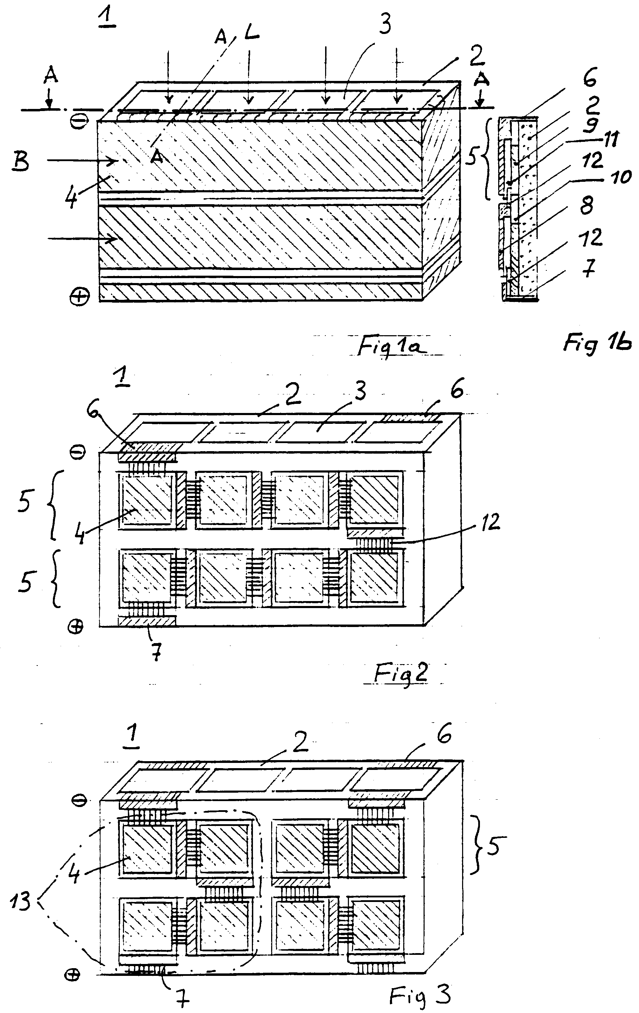

Figur 1a zeigt eine Brennstoffzellenanordnung 1 mit einem plattenförmigen keramischen Träger 2, der elektrisch isolierend und porös ist und Gaskanäle 3 aufweist. Im Ausführungsbeispiel führen die Gaskanäle 3 Luft L oder ein anderes sauerstoffhaltiges Gas.

Der poröse keramische Träger 2 mit einer Länge von 10 bis 50 cm, einer Breite von 5 bis 30 cm, einer Dicke von 0,5 bis 2 cm, einer Wandstärke von 1 bis 2 mm und einer Gaskanalbreite von 1 bis 5 cm kann durch Extrusion und Sintern bei 1400 bis 1650 °C aus Materialien mit thermischer Ausdehnung von 10 bis 11x10$^{-6}$ K$^{-1}$ bei etwa 1000 °C, wie z.B. ZrO$_2$/CaO oder MgAl$_2$O$_3$ hergestellt werden.

Auf der äußeren Oberfläche des Trägers 2 sind quer zu den inneren senkrechten Kanälen 3 Brennstoffzellenreihen 5 aufgebracht. Im Beispiel gemäß Figur 1a besteht eine Brennstoffzellenreihe 5 aus einer einzigen Brennstoffzelle 4. Die Brennstoffzellenreihen 5 sind elektrisch in Serie geschaltet. Die Serienschaltung endet in der Figur 1a oben mit einem brennstoffelekrodenseitigen Stromabgriff 6, der den Minuspol bildet und unten mit einem luftelektrodenseitigen Stromabgriff 7, der den Pluspol bildet. An der als äußerste Schicht angeordnete Brennstoffelektrode 8 der Brennstoffzelle 4 wird Brennstoff B, z.B. Wasserstoff, vorbeigeleitet.

Figur 1b zeigt einen Schnitt durch eine in Figur 1a eingetragene Schnittebene A-A. Im Schnittbild ist der poröse Träger 2 zu erkennen, auf den Luftelektroden 9 der beiden Brennstoffzellenreihen 5 aufgebracht sind. Die Luftelektroden 9 sind durch eine Isolatorschicht 10 elektrisch gegeneinander isoliert. Über den Luftelektroden 9 befindet sich jeweils eine Schicht des Festelektrolyten 11 und darüber die Brennstoffelektrode 8. Die Serienschaltung der beiden dargestellten Brennstoffzellenreihen 5 ist durch eine Schicht eines Interkonnektors 12 hergestellt. Die Brennstoffelektrode 8 der oberen Reihe 5 ist mit dem brennstoffelektrodenseitigen Stromabgriff 6 kontaktiert, die Luftelektrode 9 über eine Schicht des Interkonnektors 12 mit dem luftelektrodenseitigen Stromabgriff 7.

Figur 2 zeigt ein zweites Ausführungsbeispiel, wobei je Reihe 5 vier quadratische Brennstoffzellen 4 angeordnet und elektrisch in Serie geschaltet sind. Die beiden dargestellten Brennstoffzellenreihen 5 sind wiederum elektrisch in Serie geschaltet. Auf der Rückseite des Trägers 2 kann sich eine entsprechende Anordnung von Brennstoffzellen befinden.

Figur 3 zeigt ein drittes Beispiel, wobei zwei Brennstoffzellengruppen 13 auf einer Hauptfläche des Trägers 2 angeordnet sind, wobei jedoch ebenfalls nebeneinanderliegende Brennstoffzellen 4 in Serie geschaltet sind und auch die übereinanderliegenden Reihen einer Gruppe. Die Gruppen 13 können je nach Bedarf, d.h. je nach gewünschter Spannung in Serie oder parallelgeschaltet werden.

Die weiteren Ausführungen beziehen sich auf die Gestaltung der Flächen und der Schichtdicken, die verwendeten Materialien, die Herstellung und die Wirkung der Anordnung.

Auf den Hauptflächen des Trägers 3 sind, wie in der Zeichnung dargestellt, streifenförmige, quadratische oder rechteckige Brennstoffzellen 4 aufgebracht, die jeweils aus einer porösen Luftelektrodenschicht 9, z.B. aus La(Sr)MnO$_3$, aus einer gasdichten Festelektrolytschicht 11, z.B. aus ZrO$_2$/Y$_2$O$_3$ und aus einer porösen Brennstoffelektrodenschicht 8, z.B. aus Ni/ZrO$_2$ bestehen und über einen Interkonnektor 12 in Form von Leiterbahnen miteinander verschaltet sind, so daß durch Serien- oder Parallelschaltung ein vielzelliger Brennstoffzellenmdul gebildet wird. Die als Leiterbahnen oder Interkonnektor wirkenden Schichten bestehen aus La(Mg,Ca,Sr)CrO$_3$, La(Sr)MnO$_3$, Ni/ZrO$_2$ oder Ni und aus Kombinationen solcher Schichten.

Zur Herstellung der Brennstoffzellenanordnung gemäß Figur 1 werden auf den Träger 2 abwechselnd Streifen aus porösen Luftelektrodenschichten 9, z.B. La(Sr)MnO$_3$ mit einer Schichtbreite von 0,5 bis 2,5 cm und einer Schichtdicke von 0,1 bis 0,5 mm aufgebracht, sowie gasdichte Isolatorschichten 10 aus z.B. MgAl$_2$O$_4$ oder aus Sinterglaskeramik mit einer Schichtbreite von 0,2 bis 1 cm und einer Schichtdicke von 0,2 bis 0,5 mm abgeschieden.

Die Abscheidung der porösen Luftelektrodenschicht 9 erfolgt durch Siebdruck, Sprühen und anschließendes Sintern bei 1300 bis 1550°C oder durch Plasmaspritzen bzw. Flammspritzen des pulverförmigen Elektrodenmaterials. Die gasdichte Isolatorschicht 10 wird durch die gleichen Verfahren, aber mit feinkörnigerem Pulver oder aus Lösungen durch Spray-Pyrolyse oder Sol-Gel-Verfahren aufgebracht.

Im Übergangsbereich zwischen Luftelektrode 9 und Isolatorschicht 10 wird eine beide Schichten überlappende und 0,3 bis 1cm breite gasdichte Interkonnektorschicht 12 aus elektronenleitendem Perowskit, z.B. La(Mg,Ca,Sr)CrO$_3$ mit einer Schichtdicke von 0,05 bis 0,3 mm durch eines der obengenannten Verfahren oder durch Chemical-Vapor-Deposition(CVD) abgeschieden.

Anschließend wird eine gasdichte Zirkonoxid-Festelektrolyt-Schicht 11 von 0,05 bis 0,3 mm Dikke durch Siebdruck oder Sprühen und anschließendes Sintern sowie durch Spray-Pyrolyse, Plasmaspritzen oder Sol-Gel- bzw. CVD-Verfahren aufgebracht, welche die gesamte Luftelektrode 9 und einen Teil der Interkonnektorschicht 12 und Isolatorschicht 10 streifenförmig überdeckt.

Auf der Festelektrolytschicht 11 wird mit einem der für die Luftelektrode 9 angewandten Verfahren die poröse, etwa 0,05 bis 0,2 mm dicke Brennstoffelektrodenschicht 8 aus z.B. Ni/ZrO$_2$ abgeschieden. Die Brennstoffelektrodenschicht 8 bedeckt auch die angrenzende Isolatorschicht 10 und die Interkonnektorschicht 12 der benachbarten Zelle 4, nicht aber die Interkonnektorschicht 12 der eigenen Zelle 4. Auf diese Weise wird die Serienschaltung benachbarter Zellen realisiert.

Der Strom- und Spannungsabgriff an der mehrzelligen Anordnung 1 erfolgt am oberen und unteren Ende des Trägers 2 über Ni- bzw. Ni/ZrO$_2$-Schichten 6, 7, die auf den Stirnflächen des Trägers 2 abgeschieden und mit der Luft- bzw. Brennstoffelektrode 8, 9 der jeweils letzten Brennstoffzellen 4 der Serienschaltung verbunden sind.

In den Brennstoffzellenanordnungen gemäß den Figuren 2 und 3 sind Brennstoffzellen 4 verwendet, deren Flächen 1x1 cm² bis 4x4 cm³ oder 1x5 cm² 3x5 cm² betragen. Je größer die Flächen der Brennstoffzellen sind, umso dickere Schichten sind erforderlich für die Elektroden und den Interkonnektor um die ohmschen Spannungsverluste niedrig zu halten. Die niedrigsten Spannungsverluste und höchsten Leistungsdichten werden bei einer Ausführung nach Figur 2 mit kleinen Brennstoffzellen 4 mit z.B. 1x1 cm² oder 2x2 cm² Fläche erreicht, die alle in Serie geschaltet sind oder, wie in Figur 3 dargestellt ist, zunächst als Gruppen 13 in Serie geschaltet sind. Die Gruppen 13 können auf einfache Weise mittels durchgängiger Stromabgriffe 6, 7 auf den Stirnflächen des Trägers 2 elektrisch parllelgeschaltet werden. Bei einer solchen Anordnung können die Dicken der Elektroden und Interkonnektorschichten und somit die Materialkosten niedrig gehalten werden. Es können Schichtdicken von 0,05 bis 0,15 mm ausreichend sein.

Die Herstellung der Anordnung gemäß Figur 3 kann dadurch erfolgen, daß zunächst für die Luftelektroden 9 vorgesehene Flächen maskiert und die gesamte Oberfläche des Trägers 2 mit einer isolierenden, gasdichten Schicht z.B. aus $MgAl_2O_4$ oder Sinterglaskeramik mit den genannten Verfahren Tauchen, Siebdruck, Sprühen, Sol-Gel beschichtet wird. Auf die maskierten Flächen werden nach Entfernen der Masken poröse Luftelektrodenschichten 9 durch Siebdruck, Sprühen, Plasma- oder Flammspritzen aufgebracht. Für die Verschaltung der Luftelektroden werden bei Serienschaltung an einer Seite, bei Serien- und Parallelschaltung an zwei oder drei Seiten der Luftelektrodenschicht etwa 2 bis 10 mm breite gasdichte Interkonnektorschichten streifenförmig aufgebracht, welche sowohl einen Teil der Luftelektroden 9 als auch der angrenzenden Isolierschicht bedecken. Die Interkonnektorschicht 12 besteht aus elektronenleitendenm Perowskit, z.B. Lantanchromit, und ggf. einer zweiten darüberliegenden metallischen Schicht aus Nickel bzw. $Ni/ZrO_2$-Cermet. Die Interkonnektorschicht 12 wird durch eines der genannten Verfahren, Siebdruck, Sprühen, Niederdruck-Plasmaspritzen oder CVD abgeschieden. Die Interkonnektorschicht 12 kann auch ohne Perowskitschicht also z.B. nur aus einer Ni- bzw. $Ni/ZrO_2$-Schicht aufgebaut sein. Die anschließend mit demselben Verfahren aufgebrachten gasdichten Zirkonoxid-Festelektrolytschicht überdeckt die gesamte Luftelektrodenfläche, einen Teil der Interkonnektorfläche und eine Randzone der nicht mit Interkonnektor beschichteten angrenzenden Isolatorschicht 10.

Auf der Festelektrolytschicht 5 wird die poröse Brennstoffelektrodenschicht 8 aus z.B. $Ni/ZrO_2$ nach einem für die Luftelektrode 9 beschriebenen Verfahren aufgebracht, wobei eine Randzone der Festelektrolytschicht 11 von 1 bis 3 mm unbedeckt bleibt. Für die Serienschaltung mit einer Nachbarzelle 4 wird die Brennstoffelektrodenschicht 8 über eine Ni- bzw. $Ni/ZrO_2$-Schicht mit der Interkonntektorschicht 12 der benachbarten Zelle 4 verbunden. Für die Parallelschaltung mit einer Nachbarzelle 4 werden die Brennstoffelektroden 8 beider Zellen 4 über die dazwischenliegende Isolatorschicht 10 mit einer Ni- bzw. $Ni/ZrO_2$-Schicht miteinander verbunden.

Der Spannungs- und Stromabgriff erfolgt wie bei dem in Figur 2 dargestellten Ausführungsbeispiel.

Die beschriebene Brennstoffzellenanordnung kann auch in inverser Form ausgeführt werden, bei der die Gasströme (Luft bzw. Brenngas) und die zugehörigen Elektroden miteinander vertauscht werden. In diesem Fall strömt Brenngas in den Kanälen und die Luft außen; die Brennstoffelektrode ($Ni/ZrO_2$) wird zwischen Träger und Festelektrolyt und die Luftelektrode ($La(Sr)MnO_3$) auf die Außenfläche des Festelektrolyten aufgebracht.

Bezugszeichenliste

| | |
|---|---|
| 1 | Brennstoffzellenanordnung |
| 2 | Träger |
| 3 | Gaskanal |
| 4 | Brennstoffzelle |
| 5 | Brennstoffzellenreihe |
| 6 | brennstoffelektrodenseitiger Stromabgriff |
| 7 | luftelektrodenseitiger Stromabgriff |
| 8 | Brennstoffelektrode |
| 9 | Luftelektrode |
| 10 | Isolatorschicht |
| 11 | Festelektrolyt |
| 12 | Interkonnektor |
| 13 | Brennstoffzellengruppe |
| A-A = | Schnittebene |
| L = | Luft |
| B = | Brenngas |

**Patentansprüche**

1. Brennstoffzellenanordnung mit einem elektrisch isolierenden, porösen, keramischen Träger (2), der im Inneren - in einer z.B. senkrechten Richtung verlaufende - Gaskanäle (3), z.B. Luftkanäle, aufweist, und auf dessen äußeren Hauptflächen mehrere elektrisch miteinander verschaltete Brennstoffzellen (4) aufgebracht sind, dadurch gekennzeichnet, daß

   - die einzelnen Brennstoffzellen eine Fläche von jeweils etwa 1 bis 16 cm² aufweisen,
   - in Bezug auf den Verlauf der Gaskanäle (3) in gleicher Höhe nebeneinander befindliche Brennstoffzellen (4) zu Brennstoffzellenreihen (5) elektrisch in Serie oder parallel geschaltet sind, und

- die Brennstoffzellenreihen (5) elektrisch in Serie geschaltet sind.

2. Brennstoffzellenanordnung nach Anspruch 1, dadurch gekennzeichnet, daß quadratische Brennstoffzellen (4) mit einer Fläche von $1\times1cm^2$ bis $4\times4cm^2$ oder rechteckige Brennstoffzellen mit einer Fläche von $1\times5cm^2$ bis $3\times5cm^2$ verwendet sind.

3. Brennstoffzellenanordnung nach einem der vorstehenden Ansprüche, dadurch gekennzeichnet, daß nachstehende Materialien einzeln oder in Kombination verwendet sind:
   a) $ZrO_2/CaO$ oder $MgAl_2O_3$ als Träger (2),
   b) Ni oder $Ni/ZrO_2$ als Stromabgriff (6,7),
   c) $Ni/ZrO_2$ als Brennstoffelektrode (8),
   d) $La(Sr)MnO_3$ als Luftelektrode (9),
   e) $MgAl_2O_4$ oder Sinterglaskermik als Isolator (4),
   f) $ZrO_2/Y_2O_3$ als Festelektrolyt (11),
   g) $La(Mg,Ca,Sr)CrO_3$ als Interkonnektor (12) und
   h) Ni oder $Ni/ZrO_2$ als zusätzliche Leiterschicht.

4. Brennstoffzellenanordnung nach einem der vorstehenden Ansprüche, dadurch gekennzeichnet, daß nachstehende Schichtdicken gewählt sind:
   a) 1 bis 2 mm als Wanddicke für den Träger (2),
   b) 0,05 bis 0,5 mm als Dicke des Stromabgriffs (6,7),
   c) 0,05 bis 0,5 mm für die Brennstoffelektrode (8),
   d) 0,1 bis 0,5 mm für die Luftelektrode (9),
   e) 0,2 bis 0,5 mm für die Isolatorschicht (10),
   f) 0,05 bis 0,3 mm für den Festelektrolyten (11) und
   g) 0,05 bis 0,3 mm für den Interkonnektor (12).

Fig 1a

Fig 1b

Fig 2

Fig 3

Europäisches Patentamt

**EUROPÄISCHER RECHERCHENBERICHT**

Nummer der Anmeldung

EP    91 10 5816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | PATENT ABSTRACTS OF JAPAN<br>vol. 5, no. 153 (E-76)(825) 26. September 1981<br>& JP-A-56 084 882 ( MATSUSHITA DENKI SANGYO K. K. ) 10. Juli 1981<br>* Zusammenfassung *<br>--- | 1 | H01M8/24<br>H01M8/12 |
| A | PATENT ABSTRACTS OF JAPAN<br>vol. 13, no. 401 (E-816)(3749) 6. September 1989<br>& JP-A-01 144 570 ( MITSUBISHI HEAVY IND LTD ) 6. Juni 1989<br>* Zusammenfassung *<br>--- | 1 | |
| A | DE-A-4 033 284 (ASEA BROWN & BOVERI)<br>* Abbildung 8; Beispiel 6 *<br>--- | | |
| A<br>D,A | EP-A-0 387 643 (ASEA BROWN & BOVERI)<br>& DE-A-3 907 485<br>--- | | |
| E | EP-A-0 452 737 (ABB PATENT GMBH)<br>* Spalte 2, Zeile 5 - Zeile 20 *<br>* Spalte 2, Zeile 51 - Spalte 3, Zeile 11 *<br>* Spalte 3, Zeile 27 - Zeile 39; Ansprüche 1,2,6,8; Abbildungen 1-3 *<br><br>----- | 1-4 | **RECHERCHIERTE SACHGEBIETE (Int. Cl.5 )**<br><br>H01M |

Der vorliegende Recherchenbericht wurde für alle Patentansprüche erstellt

| Recherchenort | Abschlußdatum der Recherche | Prüfer |
|---|---|---|
| DEN HAAG | 17 DEZEMBER 1991 | D'HONDT J.W. |